# EUROPÄISCHE PATENTSCHRIFT

(11) **EP 2 334 219 B1**
(45) Veröffentlichungstag und Bekanntmachung des Hinweises auf die Patenterteilung: **19.09.2012**
(21) Anmeldenummer: 09781182.2
(22) Anmeldetag: 28.07.2009
(51) Int. Cl.: A47J 43/044, H01H 13/00

(54) **MOTORBETRIEBENES KÜCHENGERÄT MIT ZWEI TASTEN ZUM BETREIBEN DES MOTORS MIT ALTERNATIVEN DREHZAHLEN**
MOTOR-POWERED KITCHEN DEVICE HAVING TWO PUSH BUTTONS FOR OPERATION OF THE MOTOR AT ALTERNATIVE ROTATION SPEEDS
APPAREIL ÉLECTROMÉNAGER MOTORISÉ COMPORTANT DEUX TOUCHES POUR ACTIONNER LE MOTEUR À DES VITESSES DIFFÉRENTES

(30) Priorität: 01.08.2008 DE 102008040934
(43) Veröffentlichungstag der Anmeldung: 22.06.2011
(73) Patentinhaber: BSH Bosch und Siemens Hausgeräte GmbH, 81739 München (DE)
(72) Erfinder: GOLAVSEK, Samo, 3312 Prebold (SI); CATER, Matej, 3301 Petrovce (SI); DANIJEL, Roman, 3312 Ljubno (SI); SEMEJA, Uros, 3327 Smartno ob Paki (SI)
(86) Internationale Anmeldenummer: PCT/EP2009/059733
(87) Internationale Veröffentlichungsnummer: WO 2010/012724

(56) Entgegenhaltungen:
- US-A- 3 908 100
- US-A- 4 071 789
- US-A- 4 174 073
- US-A- 6 059 445

## Beschreibung

### Hintergrund der Erfindung

Die Erfindung betrifft ein Küchengerät, insbesondere einen Stabmixer, mit einem elektrischen Motor zum Antreiben eines Bearbeitungswerkzeugs, wobei das Küchengerät eine niederdrückbare erste Taste zum Betreiben des Motors bei einer ersten Drehzahl umfasst.

### Stand der Technik

Aus der US-Patentschrift US 3,619,754 ist ein elektrisches Mehrzweckhaushaltsgerät bekannt, das einen elektrischen Motor aufweist, mit dem sich ein Werkzeug, z.B. ein Mixwerkzeug, rotierend antreiben lässt. Das bekannte Mehrzweckhaushaltsgerät umfasst eine Drucktaste, durch deren Niederdrücken sich ein Stromkreis zum Versorgen des Motors mit einer elektrischen Spannung schließen lässt, um den Motor zu betreiben. Des Weiteren ist ein Stufenschalter vorgesehen, um eine Motordrehzahl des Motors aus mehreren Möglichkeiten auszuwählen.

Die deutsche Offenlegungsschrift DE 1429176 offenbart einen elektromotorisch angetriebenen Handrührer, der aus einer den Motor enthaltenden stabförmigen Antriebseinheit mit einer zum Gehäuse koaxialen Arbeitswelle und einer mit der Antriebswelle lösbar gekoppelten, ein Winkelgetriebe zum Antreiben von Werkzeugen aufweisenden Rührwerkseinheit besteht. Die Antriebseinheit weist einen Kippschalter auf, mit dem sich ein Stromkreis zum Ein- und Ausschalten des Motors öffnen und schließen lässt. Darüber hinaus ist an der Rührwerkseinheit ein Stufenschalter zur Einstellung verschiedener Rührgeschwindigkeiten vorgesehen.

Die US-Patentschrift US 7,220,047 B2 offenbart einen elektrischen Handmixer, der mit einem Einstellrad ausgestattet ist. Mittels dieses Einstellrads kann ein Benutzer eine von zwei möglichen Drehzahlen des Motors auswählen oder den Motor ausschalten.

Das Patent US 3,908,100 offenbart ein Tastenfeld für einen Mixer. Durch Betätigen der Tasten kann insbesondere die Motordrehzahl gesteuert werden. Dazu wird je nach niedergedrückter Taste eine andere Spannung einer Widerstandskaskade abgegriffen und zur Steuerung herangezogen.

Das Patent US 6,059,445 offenbart einen Mixer mit vier Tasten zur Drehzahlsteuerung des Mixermotors. Eine der Tasten ist zum Steuern einer pulsierenden Arbeitsweise des Mixers und zum Lösen der verbleibenden drei Tasten vorgesehen, den übrigen drei Tasten sind drei unterschiedlichen Drehzahlen zugeordnet.

Auch die in dem Patent US 4,174,073 offenbarte Küchenmaschine weist mehrere sogenannte "multi-speed" Knöpfe zur Steuerung auf. Außerdem ist ein Aus-Schalter zum Deaktivieren der gesamten Vorrichtung vorgesehen.

Schließlich offenbart das Patent US 4,071,789 eine Mehrzweckküchenmaschine, bei der fünf Tastknöpfe es dem Benutzer erlauben, eine von fünf unterschiedlichen Drehzahlen auszuwählen.

### Der Erfindung zugrundeliegende Aufgabe

Der Erfindung liegt die Aufgabe zugrunde, ein elektromotorisch betriebenes Küchengerät bereitzustellen, das sich mit mindestens zwei unterschiedlichen Drehzahlen betreiben lässt, das einfach und kostengünstig herstellbar ist, und das intuitiv handhabbar ist.

### Erfindungsgemäße Lösung

Die der Erfindung zugrunde liegende Aufgabe wird durch ein Küchengerät mit den Merkmalen des Anspruchs 1 gelöst.

Es ist ein erreichbarer Vorteil der Erfindung, dass ein Benutzer einfach durch Niederdrücken der ersten oder der zweiten Taste eine von zwei Drehgeschwindigkeiten auswählen kann. Durch die Erfindung kann vorteilhaft auf komplizierte Stufenschalter verzichtet werden, was die Herstellung vereinfachen und die Herstellungskosten senken kann. Auch lässt sich durch die Erfindung eine Küchengerät schaffen, dass intuitiv und sichere handhabbar ist.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Ein bevorzugtes Küchengerät ist mit einem Drehzahlwähler ausgestattet, mit dem die erste Drehzahl ausgewählt werden kann. Die Erfindung ist besonders vorteilhaft bei Küchengeräten einsetzbar, bei denen durch den Drehzahlwähler mehrere von null verschiedene Drehzahlen des Motors einstellbar sind. Bei einem besonders bevorzugten Küchengerät ist die Drehzahl des Motors zumindest innerhalb eines vorbestimmten Drehzahlbereichs im Wesentlichen kontinuierlich einstellbar. Dabei umfasst "im Wesentlichen kontinuierlich" auch Ausführungen der Erfindung, bei denen die Motordrehzahl jedenfalls aus der Perspektive des Benutzers im Wesentlichen kontinuierlich einstellbar erscheint, auch wenn sie etwa aus technischen Gründen in Wahrheit nicht kontinuierlich sondern z.B. in sehr vielen Stufen gestuft wählbar ist.

Der Drehzahlwähler kann z.B. ein Rad sein, das drehbar in einem Gehäuse des Küchengeräts angeordnet ist. Vorzugsweise bewegt der Drehzahlwähler ein mechanisch regelbares elektrisches Bauelement, z.B. ein Potentiometer oder einen Drehkondensator. Es sind aber auch andere Ausführungen der Erfindung denkbar, bei denen die Drehzahl z.B. mittels weiterer Tasten einstellbar ist, wobei z.B. eine Taste für eine Erhöhung und die andere Taste für eine Erniedrigung der Drehzahl betätigt werden kann. Durch den Drehzahlwähler wird vorzugsweise die Spannung eingestellt, die als Folge des Niederdrückens der ersten Taste an den Motor angelegt wird.

Die zweite Drehzahl ist vorzugsweise gleich oder höher als die maximal wählbare erste Drehzahl. In Ausführung der Erfindung, in denen die erste Drehzahl nicht wählbar ist, sind die erste und die zweite Drehzahl vorzugsweise verschieden, vorzugsweise ist die zweite Drehzahl größer als die erste Drehzahl.

Bei dem Küchengerät schließt die erste Taste in ihrem niedergedrückten Zustand einen ersten elektrischen Schalter, um den Motor bei der ersten Drehzahl zu betreiben. Dabei schließt der erste Schalter vorzugsweise einen ersten Stromkreis, der den Motor mit einer Stromquelle verbindet. Vorzugsweise steht der erste Schalter derart mit den Tasten in Funktionsverbindung, dass der erste Schalter geöffnet wird, wenn die erste Taste sich in ihrer nicht niedergedrückten Stellung befindet. Auf diese Weise kann vorteilhaft erreicht werden, dass wenn der Schalter in seine nicht niedergedrückte Stellung zurückkehrt, der Motor ausgeschaltet wird. Durch diese Erfindung kann ein zusätzlicher Ausschalter vermieden werden. Besonders vorteilhafterweise schaltet sich das Gerät in dieser Ausführung der Erfindung selbsttätig aus, wenn es aus der Hand genommen wird oder versehentlich aus der Hand fällt

Hierdurch lässt sich auch die Betriebssicherheit des erfindungsgemäßen Küchengeräts vorteilhaft erhöhen.

Bei der Erfindung schließt die zweite Taste in ihrem niedergedrückten Zustand einen zweiten elektrischen Schalter, um den Motor bei einer zweiten Drehzahl zu betreiben. Vorzugsweise überbrückt dabei der zweite Schalter das mechanisch regelbare elektrische Bauelement, z.B. den regelbaren Widerstand, zur Drehzahlwahl. Der zweite Schalter steht mit der zweiten Taste derart in Funktionsverbindung, dass der zweite Schalter geöffnet wird, wenn die zweite Taste sich in ihrer nicht niedergedrückten Stellung befindet.

Der Motor ist nur dann mit der zweiten Drehzahl betreibbar, wenn der erste und der zweite Schalter geschlossen sind, wobei durch den ersten Schalter der erste Stromkreis geschlossen und mit dem zweiten Schalter das regelbare elektrische Bauelement überbrückt wird. Diese Ausführung der Erfindung ermöglicht, wie im Folgenden deutlich wird, einen besonders einfachen Aufbau des erfindungsgemäßen Küchengeräts.

In einer bevorzugten Ausführung der Erfindung stehen die erste und die zweite Taste derart in Funktionsverbindung, dass ein Niederdrücken der zweiten Taste auch ein Niederdrücken der ersten Taste bewirkt. Hierzu weist die erste Taste vorzugsweise einen ersten Mitnahmebereich auf, an den ein zweiter Mitnahmebereich der zweiten Taste angreifen kann, um die erste Taste mitzunehmen, wenn die zweite Taste niedergedrückt wird. Auf diese Weise kann die zweite Taste, wenn sie niedergedrückt wird, auch die erste Taste niederdrücken. Der erste Mitnahmebereich ist vorzugsweise an der der zweiten Taste zugewandten Seite der ersten Taste angeordnet. Er ist vorzugsweise ein Vorsprung an der ersten Taste, wobei er besonders vorzugsweise von der Unterseite der ersten Taste in Richtung der zweiten Taste reicht. Der zweite Mitnahmebereich wird vorzugsweise durch einen Bereich auf der Unterseite der zweiten Taste gebildet. Der Vorsprung der ersten Taste reicht vorzugsweise unter die zweite Taste. Die erste und die zweite Taste sind vorzugsweise im Wesentlichen in die gleiche Richtung niederdrückbar. Hierdurch lässt sich vorteilhaft die Konstruktion des Küchengeräts verein-fachen und preiswerter gestalten.

In einer anderen Ausführung der Erfindung schließt die zweite Taste in ihrem niedergedrückten Zustand auch den ersten elektrischen Schalter. Vorzugsweise schließt die zweite Taste den ersten elektrischen Schalter ohne dabei die erste Taste niederzudrücken oder auf andere Weise zu betätigen. Auf diese Weise kann vorteilhaft durch Niederdrücken des zweiten Tasters sowohl der erste Stromkreis geschlossen als auch das mechanisch einstellbare Bauelement überbrückt werden, ohne dass ein Niederdrücken der zweiten Taste auch ein Niederdrücken der ersten Taste bewirken müsste.

Die erste Taste weist vorzugsweise ein erstes Federelement auf, um sie in die nicht niedergedrückte Stellung vorzuspannen. Das Federelement ist vorzugsweise ein Teil des ersten Schalters, z.B. ein federnder zungenförmiger Kontakt des Schalters. Alternativ ist aber z.B. auch eine Spiralfeder denkbar. Vorzugsweise bewegt sich die erste Taste beim Loslassen selbsttätig in die nicht niedergedrückte Stellung zurück, wobei vorzugsweise der erste Schalter geöffnet wird. Durch diese Ausführung der Erfindung ist vorteilhaft erreichbar, dass bei einem Loslassen des Küchengeräts, z.B. weil es aus der Hand fällt, der erste Stromkreis automatisch geöffnet werden kann um den Motor anzuhalten. Hierdurch kann insbesondere die Betriebssicherheit des Küchengeräts erhöht werden.

Vorzugsweise weist die zweite Taste ein zweites Federelement auf, um sie in die nicht niedergedrückte Stellung vorzuspannen. Das Federelement ist vorzugsweise ein Teil des ersten Schalters, z.B. ein federnder zungenförmiger Kontakt des Schalters. Alternativ ist aber z.B. auch eine Spiralfeder denkbar. Vorzugsweise kehrt die zweite Taste beim Loslassen selbsttätig in die nicht niedergedrückte Stellung zurück wobei besonders vorzugsweise der zweite Schalter geöffnet wird. Hierdurch kann vorteilhaft erreicht werden, dass auch der zweite Schalter geöffnet wird, und das Küchengerät von der zweiten Drehzahl in die erste Drehzahl zurückkehrt. Dies kann die Bedienung des Küchengeräts erleichtern und die Betriebssicherheit erhöhen.

In einer bevorzugten Ausführung der Erfindung stehen die erste und die zweite Taste derart in Funktionsverbindung, dass ein Zurückbewegen der ersten Taste durch das erste Federelement auch ein Zurückbewegen der zweiten Taste bewirkt. Dies wird vorzugsweise dadurch erreicht, dass die erste Taste die zweite Taste beim Zurückbewegen der ersten Taste mitnimmt, besonders vorzugsweise, indem der zweite Mitnahmebereich der zweiten Taste an den ersten Mitnahmebereich der ersten Taste angreift. Dadurch kann vorteilhaft erreicht werden, dass beim Loslassen der zweiten Taste diese, soweit auch die erste Taste losgelassen ist, selbstständig in die nicht niedergedrückte Stellung zurückkehrt. Insbesondere ist erreichbar, dass wenn das Küchengerät losgelassen wird oder es versehentlich aus der Hand fällt, der erste Schalter geöffnet und dadurch der Motor zum Stillstehen gebracht werden kann.

In einer bevorzugten Ausführung der Erfindung kann der Motor ein Bearbeitungswerkzeug rotierend antreiben. Ein bevorzugtes Küchengerät ist ein Mixer, insbesondere ein Handmixer, z.B. ein Stabmixer. Als Bearbeitungswerkzeug kommt z.B. ein Rührbesen, ein Knethaken, ein Mixfuß oder ein Universalzerkleinerer in Frage. Natürlich umfasst die Erfindung auch Ausführungen, bei denen der Motor mehrere Bearbeitungswerkzeuge antreiben kann, z.B. ein Paar von Rührbesen oder Knethaken.

### Kurzbeschreibung der Figuren

Die Erfindung wird im Folgenden anhand schematischer Zeichnungen an einem Ausführungsbeispiel mit weiteren Einzelheiten näher erläutert.

Es zeigen:
- Fig. 1:: Ein erfindungsgemäßes Küchengerät in Form eines Stabmixers in perspektivischer Ansicht von oben mit Blick auf die Tasten und den Drehzahlwähler;
- Fig. 2:: Eine perspektivische Aufrissansicht des in Fig. 1 dargestellten Stabmixers mit freigelegten Tasten und freigelegtem Drehzahlwähler.
- Fig. 3:: Eine weitere perspektivische Aufrissdarstellung der Tasten und des Drehzahlwählers bei niedergedrückter erster Taste;

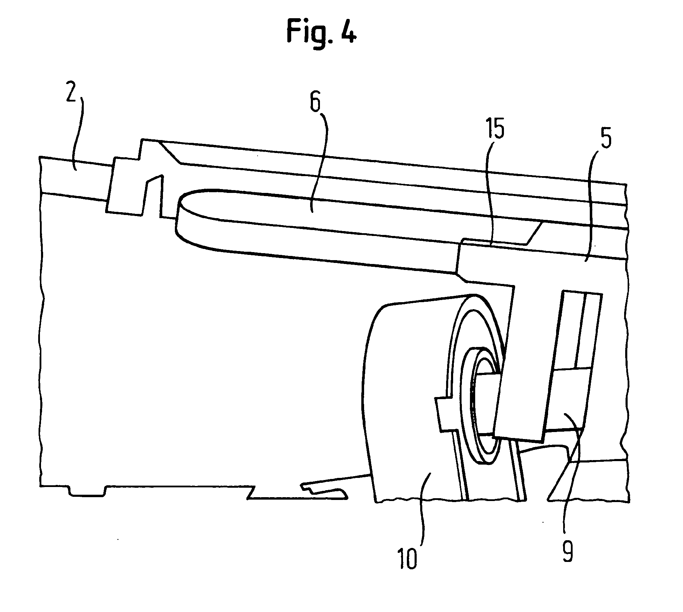

- Fig. 4:: Eine perspektivische Aufrissdarstellung des Bereichs der ersten und zweiten Taste bei unbetätigten Tasten; und

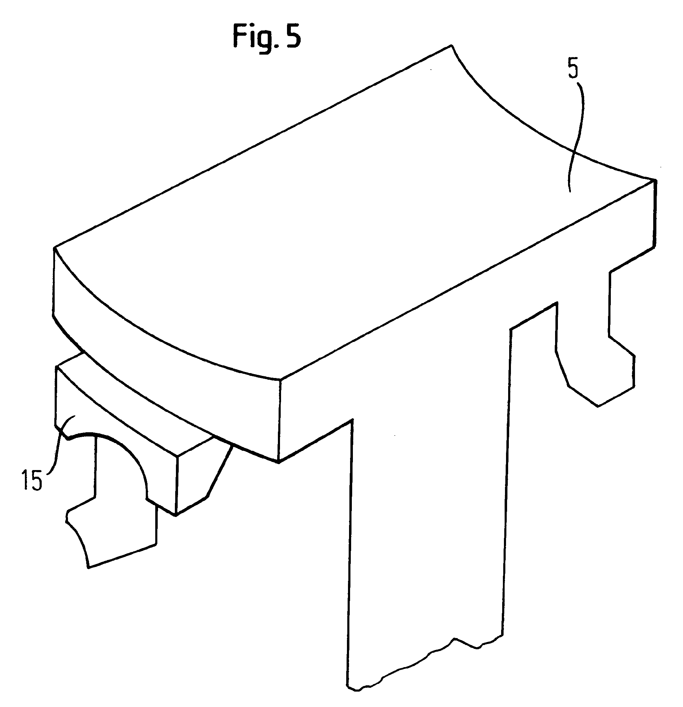

- Fig. 5:: Eine Darstellung der ersten Taste mit einem Mitnahmebereich.

### Ausführliche Beschreibung der Erfindung anhand eines Ausführungsbeispiels

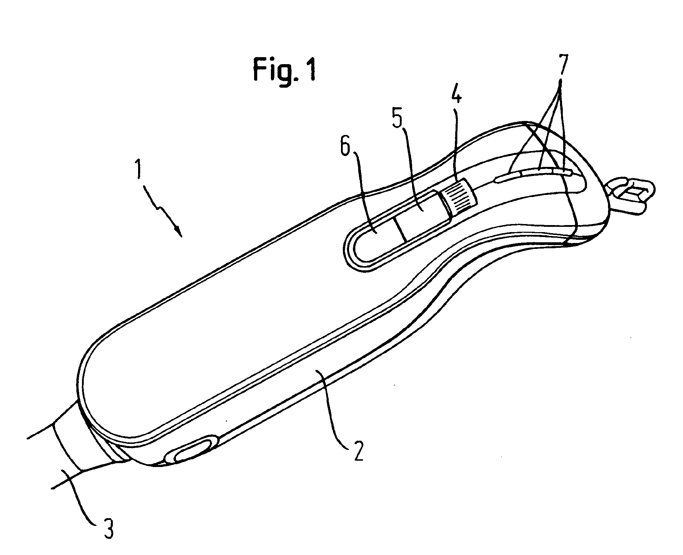

Der in Fig. 1 dargestellte Stabmixer 1 umfasst ein Gehäuse, in dem ein nicht dargestellter elektrischer Motor untergebracht ist, der das Messer eines an den Stabmixer 1 ankuppelbaren Mixstabs 3 über eine nicht dargestellte Welle rotierend antreiben kann. Die Bedienelemente umfassen einen Drehzahlwähler 4, mit dem sich eine erste Motordrehzahl auswählen lässt, eine erste Taste 5 und eine zweite Taste 6. Außerdem ist ein Drehzahlanzeigebereich 7 vorgesehen, der mittels dreier Leuchtdioden die aktuelle Drehzahl des Motors angibt.

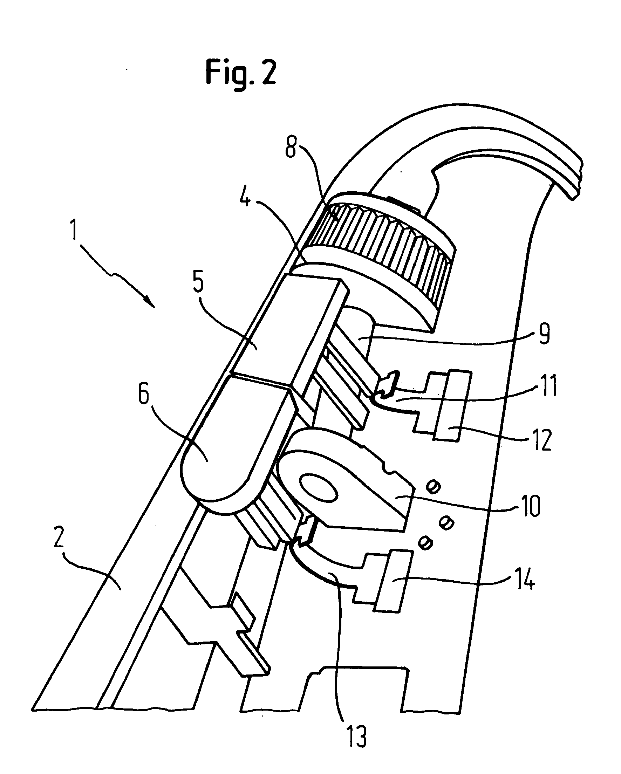

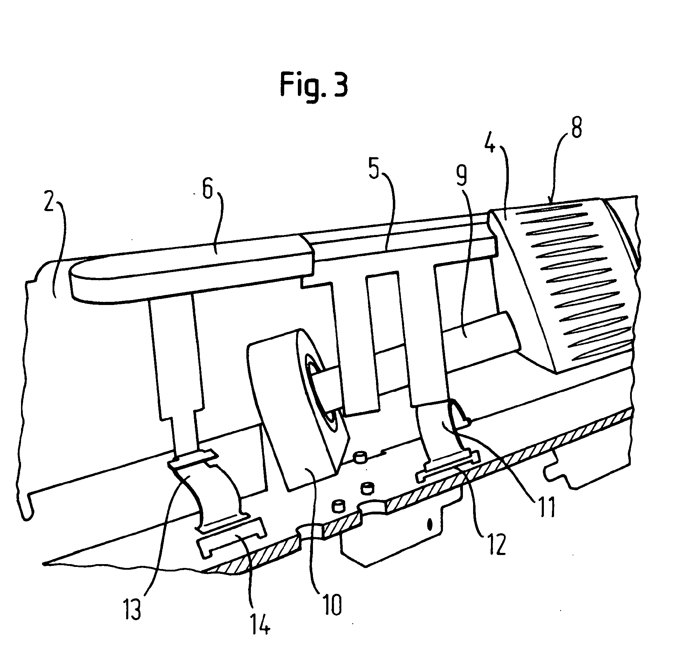

Wie in den Fig. 2 und 3 gut erkennbar, ist der Drehzahlwähler 4 als aus dem Gehäuse mit einer Stirnseite 8 leicht herausragendes Rad ausgebildet, das über eine Welle 9 ein Potentiometer 10 steuern kann. Drückt ein Benutzer die erste Taste 5 gegen die Vorspannung der federnden oberen Zunge 11 des ersten Schalters 12 nieder, schließt sich der erste Schalter 12 wie in Fig. 3 erkennbar, und versorgt den Motor mit einer Spannung, die der mittels des Drehzahlwählers 11 über das Potentiometer 10 eingestellten Drehzahl entspricht. Wird die erste Taste 5 wieder losgelassen, kehrt die erste Taste durch die Kraft der oberen Zunge 11 des ersten Schalters 12 in die nicht niedergedrückte Stellung zurück. Die Stromzufuhr zum Motor wird so unterbrochen und der Motor wird angehalten. Hierdurch ist nicht nur eine einfache und intuitive Handhabung des Stabmixers 1 möglich sondern es wird auch die Betriebssicherheit erhöht, etwa wenn der Stabmixer 1 dem Benutzer aus der Hand fällt.

Drückt ein Benutzer die zweite Taste 6 gegen die Vorspannung der federnden oberen Zunge 13 des zweiten Schalters 14 nieder, so wird der zweite Schalter 14 geschlossen und dadurch eine zweite Motordrehzahl eingestellt, die der höchsten mit dem Drehzahlwähler 8 wählbaren Drehzahl entspricht. Dies wird dadurch erreicht, dass der zweite Schalter 14 dem Potentiometer 10 elektrisch parallel geschaltet ist und das Potentiometer 10 bei geschlossenem zweiten Schalter 14 überbrückt. Gleichzeitig greift die zweite Taste 6 mit ihrer Unterseite an einen Vorsprung 15 an der Unterseite der ersten Taste 5 an und nimmt diese ebenfalls in die niedergedrückte Stellung mit und zwar gegen die Vorspannung der federnden oberen Zunge 11 des ersten Schalters 12. Hierdurch wird auch der erste Schalter 12 geschlossen und der Motor mit elektrischer Spannung versorgt, die allerdings aufgrund des gleichzeitig geschlossenen zweiten Schalters 14 der höchsten Motordrehzahl entspricht. Wird die zweite Taste 6 losgelassen, bewegt sie sich aufgrund der Federspannung der oberen Zunge 13 des zweiten Schalters 2 wieder in die nicht niedergedrückte Stellung zurück, wodurch die eingestellte Motordrehzahl wieder die mit dem Drehzahlwähler gewählte ist.

Soweit auch die erste Taste 5 losgelassen ist, bewegt auch diese sich aufgrund der Federkraft der oberen Lasche 11 des ersten Schalters 12 in die nicht niedergedrückte Stellung zurück. Dabei werden jeweils der zweite Schalter 14 und der erste Schalter 12 geöffnet, wodurch die Stromzufuhr zum Motor unterbrochen, dieser also angehalten ist.

Durch die beiden Tasten ist der Mixstab einfach und preiswert herzustellen und intuitiv und sicher zu handhaben.

### Bezugszeichen

- 1: Stabmixer
- 2: Gehäuse
- 3: Mixstab
- 4: Drehzahlwähler
- 5: Erste Taste
- 6: Zweite Taste
- 7: Anzeigebereich
- 8: Drehzahlwähler
- 9: Achse
- 10: Potentiometer
- 11: Zunge des ersten Schalters
- 12: Erster Schalter
- 13: Zunge des zweiten Schalters
- 14: Zweiter Schalter
- 15: Vorsprung

## Patentansprüche

1. Küchengerät (1) mit einem elektrischen Motor zum Antreiben eines Bearbeitungswerkzeugs (3), wobei das Küchengerät (1) eine niederdrückbare erste Taste (5) zum Betreiben des Motors bei einer ersten Drehzahl umfasst, wobei die erste Taste (5) in ihrem niedergedrückten Zustand einen ersten elektrischen Schalter (12) schließt, um den Motor bei der ersten Drehzahl zu betreiben, und das Küchengerät (1) eine niederdrückbare zweite Taste (6) zum Betreiben des Motors bei einer zweiten Drehzahl umfasst, wobei die zweite Taste (6) in ihrem niedergedrückten Zustand einen zweiten elektrischen Schalter (14) schließt, um den Motor bei der zweiten Drehzahl zu betreiben, **dadurch gekennzeichnet, dass**
der Motor nur mit der zweiten Drehzahl betreibbar ist, wenn der erste (12) und der zweite Schalter (14) geschlossen sind.

2. Küchengerät (1) nach Anspruch 1, **dadurch gekennzeichnet, dass** es einen Drehzahlwähler (8) aufweist, mit dem die erste Drehzahl wählbar ist.

3. Küchengerät (1) nach Anspruch 2, **dadurch gekennzeichnet, dass** die zweite Drehzahl gleich der oder höher als die maximale wählbare erste Drehzahl ist.

4. Küchengerät (1) nach einem der vorhergehenden Ansprüche, **dadurch gekennzeichnet, dass**
die erste (5) und die zweite Taste (6) derart in Funktionsverbindung stehen, dass ein Niederdrücken der zweiten Taste (6) auch ein Niederdrücken der ersten Taste (5) bewirkt.

5. Küchengerät (1) nach Anspruch 4, **dadurch gekennzeichnet, dass**
die erste Taste (5) einen ersten Mitnahmebereich (15) aufweist, an den ein zweiter Mitnahmebereich der zweiten Taste (6) angreifen kann, um die erste Taste (5) mitzunehmen, wenn die zweite Taste (6) niedergedrückt wird.

6. Küchengerät (1) nach einem der vorhergehenden Ansprüche 1 bis 3, **dadurch gekennzeichnet, dass**
die zweite Taste (5) in ihrem niedergedrückten Zustand auch den ersten elektrischen Schalter (14) schließt.

7. Küchengerät (1) nach einem der vorherigen Ansprüche, **dadurch gekennzeichnet, dass**
die erste Taste (5) ein erstes Federelement (11) aufweist, um sie in die nicht niedergedrückte Stellung vorzuspannen.

8. Küchengerät (1) nach einem der vorherigen Ansprüche, **dadurch gekennzeichnet, dass**
die zweite Taste (6) ein zweites Federelement (13) aufweist, um sie in die nicht niedergedrückte Stellung vorzuspannen.

9. Küchengerät (1) nach einem der vorherigen Ansprüche, **dadurch gekennzeichnet, dass**
die erste (5) und die zweite Taste (6) im Wesentlich in die gleiche Richtung niederdrückbar sind.

10. Küchengerät (1) nach einem der vorherigen Ansprüche, **dadurch gekennzeichnet, dass**
die erste (5) und die zweite Taste (6) derart in Funktionsverbindung stehen, dass ein Zurückbewegen der ersten Taste (5) durch das erste Federelement (11) auch ein Zurückbewegen der zweiten Taste (6) bewirkt.

## Claims

1. Kitchen appliance (1) with an electric motor for driving a processing tool (3), wherein the kitchen appliance (1) comprises a depressable first button (5) for operating the motor at a first rotational speed, wherein the first button (5) in the depressed state thereof closes a first electrical switch (12) in order to operate the motor at the first rotational speed, and the kitchen appliance (1) comprises a depressable second button (6) for operating the motor at a second rotational speed, wherein the second button (6) in the depressed state thereof closes a second electrical switch (14) in order to operate the motor at the second rotational speed, **characterised in that** the motor is operable only at the second rotational speed when the first switch (12) and the second switch (14) are closed.

2. Kitchen appliance (1) according to claim 1, **characterised in that** it comprises a rotational speed selector (8) by which the first rotational speed is selectable.

3. Kitchen appliance (1) according to claim 2, **characterised in that** the second rotational speed is the same as or higher than the maximum selectable first rotational speed.

4. Kitchen appliance (1) according to any one of the preceding claims, **characterised in that** the first button (5) and the second button (6) are so functionally connected that depressing the second button (6) also causes depressing of the first button (5).

5. Kitchen appliance (1) according to claim 4, **characterised in that** the first button (5) has a first entraining region (15) at which a second entraining region of the second button (6) can engage in order to entrain the first button (5) when the second button (6) is depressed.

6. Kitchen appliance (1) according to any one of the preceding claims 1 to 3, **characterised in that** the second button (5) in the depressed state thereof also closes the first electrical switch (14).

7. Kitchen appliance (1) according to any one of the preceding claims, **characterised in that** the first button (5) comprises a first spring element (11) in order to bias it into the non-depressed setting.

8. Kitchen appliance (1) according to any one of the preceding claims, **characterised in that** the second button (6) comprises a second spring element (13) in order to bias it into the non-depressed setting.

9. Kitchen appliance (1) according to any one of the preceding claims, **characterised in that** the first button (5) and the second button (6) can be depressed in substantially the same direction.

10. Kitchen appliance (1) according to any one of the preceding claims, **characterised in that** the first button (5) and the second button (6) are so functionally connected that movement back of the first button (5) by the first spring element (11) also causes movement back of the second button (6).

## Revendications

1. Appareil de cuisine (1) doté d'un moteur électrique pour l'entraînement d'un outil de traitement (3), l'appareil de cuisine (1) comprenant une première touche (5) enfonçable pour faire fonctionner le moteur à une première vitesse, la première touche (5) fermant un premier interrupteur (12) électrique dans son état enfoncé, afin de faire fonctionner le moteur à la première vitesse, et l'appareil de cuisine (1) comprenant une seconde touche (6) enfonçable pour faire fonctionner le moteur à une seconde vitesse, la seconde touche (6) fermant un second interrupteur (14) électrique dans son état enfoncé, afin de faire fonctionner le moteur à la seconde vitesse, **caractérisé en ce que**
le moteur ne peut fonctionner à la deuxième vitesse que si le premier interrupteur (12) et le second interrupteur (14) sont fermés.

2. Appareil de cuisine (1) selon la revendication 1, **caractérisé en ce qu'**il présente un sélecteur de vitesse (8), avec lequel la première vitesse peut être choisie.

3. Appareil de cuisine (1) selon la revendication 2, **caractérisé en ce que** la seconde vitesse est égale ou supérieure à la première vitesse maximale pouvant être choisie.

4. Appareil de cuisine (1) selon l'une des revendications précédentes, **caractérisé en ce que** la première touche (5) et la seconde touche (6) sont en liaison de fonction de telle sorte qu'un enfoncement de la seconde touche (6) entraîne également un enfoncement de la première touche (5).

5. Appareil de cuisine (1) selon la revendication 4, **caractérisé en ce que** la première touche (5) présente une première zone d'entraînement (15), sur laquelle une seconde zone d'entraînement de la seconde touche (6) peut s'appliquer, afin d'entraîner la première touche (5) lorsque la seconde touche (6) est enfoncée.

6. Appareil de cuisine (1) selon l'une des revendications précédentes 1 à 3, **caractérisé en ce que**
la seconde touche (5) ferme également le premier interrupteur (14) électrique dans son état enfoncé.

7. Appareil de cuisine (1) selon l'une des revendications précédentes, **caractérisé en ce que**
la première touche (5) présente un premier élément à ressort, afin de la pré-tendre dans la position non enfoncée.

8. Appareil de cuisine (1) selon l'une des revendications précédentes, **caractérisé en ce que**
la seconde touche (6) présente un second élément à ressort (13), afin de la pré-tendre dans la position non enfoncée.

9. Appareil de cuisine (1) selon l'une des revendications précédentes, **caractérisé en ce que**
la première touche (5) et la seconde touche (6) peuvent être enfoncées sensiblement dans la même direction.

10. Appareil de cuisine (1) selon l'une des revendications précédentes, **caractérisé en ce que**
la première touche (5) et la seconde touche (6) sont en liaison de fonction de telle sorte qu'un déplacement en arrière de la première touche (5) par le premier élément à ressort (11) entraîne également un déplacement en arrière de la seconde touche (6).
